# EUROPÄISCHE PATENTSCHRIFT

(11) **EP 1 129 306 B1**
(45) Veröffentlichungstag und Bekanntmachung des Hinweises auf die Patenterteilung: **28.05.2003**
(21) Anmeldenummer: 99947218.6
(22) Anmeldetag: 15.07.1999
(51) Int. Cl.: F16D 65/16

(54) **ELEKTROMECHANISCHE RADBREMSVORRICHTUNG**
ELECTROMECHANICAL WHEEL-BRAKE DEVICE
SYSTEME ELECTROMECANIQUE DE FREIN DE ROUE

(30) Priorität: 10.11.1998 DE 19851670
(43) Veröffentlichungstag der Anmeldung: 05.09.2001
(73) Patentinhaber: ROBERT BOSCH GMBH, 70442 Stuttgart (DE)
(72) Erfinder: KELLER, Frieder, D-76698 Ubstadt-Weiher (DE)
(86) Internationale Anmeldenummer: DE9902199
(87) Internationale Veröffentlichungsnummer: WO00028234

(56) Entgegenhaltungen:
- DE-A- 3 840 685

## Beschreibung

### Stand der Technik

Die Erfindung betrifft eine elektromechanische Radbremsvorrichtung mit den Merkmalen des Oberbegriffs des Anspruchs 1, die insbesondere zur Verwendung in einem Kraftfahrzeug vorgesehen ist.

Aus der DE 38 40 685 A1 ist eine elektromechanische Radbremsvorrichtung bekannt. Die bekannte Radbremsvorrichtung weist einen Elektromotor sowie drei hintereinander geschaltete Planetengetriebe auf, deren erstes vom Elektromotor antreibbar ist. Das dritte Planetengetriebe betätigt eine Bremsbetätigungsvorrichtung der Radbremsvorrichtung, wobei die Bremsbetätigungseinrichtung der bekannten Radbremsvorrichtung einen Doppelnocken aufweist, der mit dem dritten Planetengetriebe drehbar ist und der zwei Bremsbacken (Reibbremsbeläge) gegen eine Bremstrommel (Bremskörper) der als Trommelbremse ausgebildeten Radbremsvorrichtung drückt. Eines der Planetengetriebe, vorzugsweise das erste weist zwei schaltbare Kupplungen auf, mit denen wahlweise ein Hohlrad des Planetengetriebes arretierbar oder ein Planetenträger des Planetengetriebes drehfest mit dem Hohlrad verbindbar ist. Bei mit dem Hohlrad drehfesten Planetenträger ist das eine Planetengetriebe überbrückt, sein Übersetzungsverhältnis ist 1 : 1. In diesem Zustand bewirken lediglich die beiden anderen Planetengetriebe eine Drehzahluntersetzung, wodurch die Bremsbetätigungseinrichtung schnell, jedoch mit niedrigem Moment bzw. niedriger Kraft betätigbar ist. in diesem Zustand wird ein Luftspalt zwischen den Reibbremsbelägen und dem Bremskörper überwunden. Nach Umschalten der beiden Kupplungen bewirkt auch das mit den Kupplungen ausgerüstete Planetengetriebe eine Drehzahluntersetzung, es ergibt sich insgesamt eine größere Drehzahluntersetzung über alle drei Planetengetriebe. In diesem Zustand wird zwar die Bremsbetätigungseinrichtung langsamer, jedoch mit höherer Kraft bzw. größerem Moment betätigt. Dieser Zustand dient dazu, die bereits am Bremskörper anliegenden Reibbremsbeläge mit großer Kraft an den Bremskörper anzudrücken und dadurch eine hohe Bremskraft und ein hohes Bremsmoment zu erzielen.

### Vorteile der Erfindung

Die erfindungsgemäße Radbremsvorrichtung mit den Merkmalen des Anspruchs 1 weist zwei Planetengetriebe sowie zwei schaltbare Kupplungen auf. Eine erste der beiden schaltbaren Kupplungen arretiert in eine Schaltstellung ein Sonnenrad des zweiten Planetengetriebes und verbindet in einer anderen Schaltstellung die Sonnenräder der beiden Planetengetriebe drehfest miteinander. Die zweite Kupplung arretiert in einer Schaltstellung ein Hohlrad des zweiten Planetengetriebes und verbindet in einer anderen Schaltstellung die Hohlräder der beiden Planetengetriebe drehfest miteinander. Die erfindungsgemäße Radbremsvorrichtung ermöglicht vier Schaltzustände ihrer beiden Planetengetriebe, nämlich einen Schnell- und einen Langsamgang zum Zuspannen der Radbremsvorrichtung, einen Schnellgang mit Drehrichtungsumkehr zum Lösen der Radbremsvorrichtung sowie eine Feststellstellung, in der sich die beiden Planetengetriebe nicht verdrehen lassen, so daß eine aufgebrachte Bremskraft auch bei unbestromtem Elektromotor aufrecht erhalten bleibt.

Die erfindungsgemäße Radbremsvorrichtung hat den Vorteil, daß sich mit ihr ein Luftspalt zwischen dem Reibbremsbelag und dem Bremskörper schnell überwinden und anschließend durch Übergang zu einem größeren Untersetzungsverhältnis eine hohe Andruckkraft des Reibbremsbelags an den Bremskörper erreichen läßt. Weiterer Vorteil ist, daß sich mit gleicher Drehrichtung des Elektromotors die Andruckkraft des Reibbremsbelags an den Bremskörper verringern und die Radbremsvorrichtung ganz lösen läßt, der Elektromotor wird also beim Lösen der Radbremsvorrichtung mit derselben Drehrichtung betrieben wie beim Zuspannen. Es ist somit keine Drehrichtungsumkehr und kein Reversierbetrieb des Elektromotors notwendig. Bei Benutzung der Radbremsvorrichtung wird der Elektromotor ausschließlich ein- und ausgeschaltet, wozu ein Leistungsschalter ausreicht. Zur Drehrichtungsumkehr wäre dagegen eine Vollbrücke mit vier Leistungsschaltern erforderlich. Weiterer Vorteil der Erfindung ist, daß die Rückstellung der Radbremsvorrichtung mit hoher Geschwindigkeit erfolgt, so daß sich die Radbremsvorrichtung schnell löst. Zusätzlich hat die erfindungsgemäße Radbremsvorrichtung den Vorteil einer verbesserten Dynamik, da bei einem schnellen Wechsel vom Zuspannen zum Lösen bzw. vom Vergrößern der Andruckkraft des Reibbremsbelags gegen den Bremskörper zum Verringern der Andruckkraft und umgekehrt die Drehrichtung des Elektromotors nicht gegen sein Trägheitsmoment umgekehrt, sondern beibehalten wird, so daß bei einem schnellen Wechsel das Trägheitsmoment des Elektromotors sogar ausgenutzt werden kann. Dies macht die erfindungsgemäße Radbremsvorrichtung insbesondere für eine Blockierschutz-, Antriebsschlupf- und/oder Fahrdynamikregelung geeignet, die einen schnellen Wechsel zwischen Zuspannen und Lösen bzw. Erhöhen und Verringern der Bremskraft erfordern.

Die Unteransprüche haben vorteilhafte Ausgestaltungen und Weiterbildungen der im Anspruch 1 angegebenen Erfindung zum Gegenstand.

Vorzugsweise sind die beiden schaltbaren Kupplungen als elektromagnetische Kupplungen ausgebildet, die in einer unbestromten Grundstellung das Sonnenund das Hohlrad des zweiten Planetengetriebes arretieren (Anspruch 6). Auf diese Weise wird die Radbremsvorrichtung stillgesetzt, so daß eine aufgebrachte Andruckkraft des Reibbremsbelags an den Bremskörper auch bei unbestromten Elektromotor beibehalten wird. Die Radbremsvorrichtung läßt sich dadurch als Feststellbremse verwenden.

Zur Umsetzung der Rotationsbewegung des zweiten Planetengetriebes in eine Translationsbewegung zum Andrücken des Reibbremsbelags an den Bremskörper weist die Betätigungseinrichtung der Radbremsvorrichtung bei einer Ausgestaltung der Erfindung ein Schraubgetriebe, das wegen des guten Wirkungsgrades und der Reibungsarmut vorzugsweise als Rollengewindetrieb ausgebildet ist, auf (Anspruch 7).

### Zeichnung

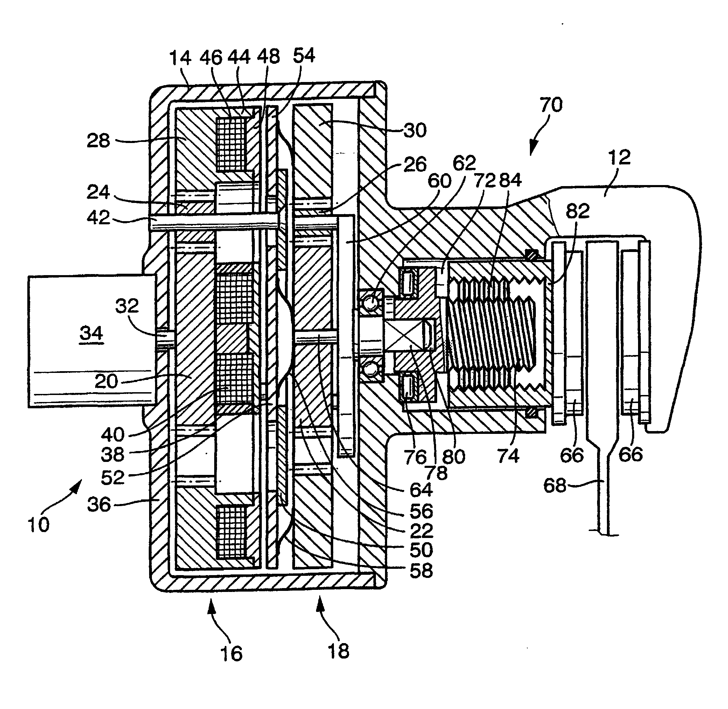

Die Erfindung wird nachfolgend anhand eines in der Zeichnung dargestellten Ausführungsbeispiels näher erläutert. Die einzige Figur zeigt ein Ausführungsbeispiel einer erfindungsgemäßen Radbremsvorrichtung im Schnitt in teilweise vereinfachter, schematisierter Darstellung.

### Beschreibung des Ausführungsbeispiels

Die erfindungsgemäße, insgesamt mit 10 bezeichnete, elektromechanische Radbremsvorrichtung ist als Scheibenbremse ausgebildet. Sie weist einen Bremssattel 12 auf, an den ein Getriebegehäuse 14 angeflanscht ist. Im Getriebegehäuse 14 sind zwei hintereinander geschaltete Planetengetriebe 16, 18 aufgenommen. Jedes Planetengetriebe 16, 18 weist ein Sonnenrad 20, 22, drei Planetenräder 24, 26 sowie ein Hohlrad 28, 30 auf. Von den Planetenrädern 24, 26 ist jeweils nur eines zu sehen, da die anderen beiden Planetenräder vor und hinter der Zeichenebene liegen und das hinter der Zeichenebene liegende Planetenrad vom jeweiligen Sonnenrad 20, 22 verdeckt ist.

Das Sonnenrad 20 des ersten Planetengetriebes 16 ist drehfest auf eine Motorwelle 32 eines Elektromotors 34 aufgesetzt, der von außen an einer Stirnwand 36 des Getriebegehäuses 14 angeflanscht ist. Auf einer dem Elektromotor 34 abgewandten und dem zweiten Planetengetriebe 18 zugewandten Stirnseite des Sonnenrades 20 des ersten Planetengetriebes 16 ist ein zylindrischer Polkörper 38 einer ersten, schaltbaren, elektromagnetischen Kupplung drehfest angebracht.

Die Planetenräder 24 des ersten Planetengetriebes 16 sind drehbar auf Achsstiften 42 gelagert, die fest in der Stirnwand 36 des Getriebegehäuses 14 verankert sind. Die Planetenräder 24 des ersten Planetengetriebes 16 sind somit ortsfest und um ihre eigenen Achsen drehbar im Getriebegehäuse 14 aufgenommen, die Stirnwand 36 des Getriebegehäuses 14 bildet einen feststehenden Planetenträger des ersten Planetengetriebes 16.

Das Hohlrad 28 des ersten Planetengetriebes 16 weist einen seitlich angeordneten, hohlen Ringbund 44 auf, in dem eine Spule 46 aufgenommen ist. Der Ringbund 44 befindet sich auf einer dem zweiten Planetengetriebe 18 zugewandten Seite des Hohlrades 28. Er bildet einen Polkörper 44 einer zweiten, schaltbaren, elektromagnetischen Kupplung und ist mit einem Reibbelag 48, der Bestandteil der zweiten Kupplung ist, auf der dem zweiten Planetengetriebe 18 zugewandten Seite verschlossen.

Mit den Achsstiften 42 der Planetenräder 24 des ersten Planetengetriebes 16 ist ein ringscheibenförmiger Bremsring 50 vernietet. Der Bremsring 50 befindet sich in einem Zwischenraum zwischen dem ersten und dem zweiten Planetengetriebe 16, 18. Da die Achsstifte 42 fest im Getriebegehäuse 14 verankert sind, ist auch der mit den Achsstiften 42 vernietete Bremsring 50 feststehend im Getriebegehäuse 14 gehalten.

Der Bremsring 50 wirkt mit Ankerplatten 52, 54 der beiden elektromagnetischen Kupplungen 38, 40, 52; 44, 46, 48, 54 zusammen. Die Ankerplatten 52, 54 sind in einer Ebene in einem Zwischenraum zwischen dem Bremsring 50 und dem ersten Planetengetriebe 16 angeordnet. Die Ankerplatte 52 der ersten elektromagnetischen Kupplung 38, 40, 52 hat die Form einer Kreisscheibe und wird von der die Form einer Ringscheibe aufweisenden Ankerplatte 54 der zweiten elektromagnetischen Kupplung 44, 46, 48, 54 umschlossen.

Die Ankerplatte 52 der ersten elektromagnetischen Kupplung 38, 40, 52 ist mit einem Außenrand einer Tellerfeder 56 vernietet, deren Innenrand mit dem Sonnenrad 22 des zweiten Planetengetriebes 18 vernietet ist. Über die Tellerfeder 56 ist die Ankerplatte 52 der ersten elektromagnetischen Kupplung 38, 40, 52 drehfest mit dem Sonnenrad 22 des zweiten Planetengetriebes 18 verbunden. Die Tellerfeder 56 zieht die Ankerplatte 52 in Richtung des Sonnenrades 22, d. h. die Ankerplatte 52 liegt aufgrund der Federkraft der Tellerfeder 56 an dem im Getriebegehäuse 14 drehfesten Bremsring 50 an. Das Sonnenrad 22 des zweiten Planetengetriebes 18 ist in dieser unbestromten Grundstellung der ersten elektromagnetischen Kupplung 38, 40, 52 gegen Drehen arretiert.

Durch Bestromen der Spule 40 der ersten elektromagnetischen Kupplung 38, 40, 52 wird die Ankerplatte 52 gegen die Federkraft der Tellerfeder 56 vom Bremsring 50 abgehoben und in reibschlüssige Anlage an den Pohlkörper 38 der ersten elektromagnetischen Kupplung 38, 40, 52 gebracht. Über die Tellerfeder 56 ist in dieser bestromten Schaltstellung der ersten elektromagnetischen Kupplung 38, 40, 52 das Sonnenrad 22 des zweiten Planetengetriebes 18 mit dem Sonnenrad 20 des ersten Planetengetriebes 16 drehfest verbunden.

Die Ankerscheibe 54 der zweiten elektromagnetischen Kupplung 44, 46, 48, 54 ist mit einem Außenrand einer Ringtellerfeder 58 vernietet, deren Innenwand mit dem Hohlrad 30 des zweiten Planetengetriebes 18 verbunden ist. Dadurch ist die Ankerplatte 54 der zweiten elektromagnetischen Kupplung 44, 46, 48, 54 drehfest mit dem Hohlrad 30 des zweiten Planetengetriebes 18. Die Ringtellerfeder 58 zieht die Ankerplatte 54 der zweiten elektromagnetischen Kupplung 44, 46, 48, 54 in Anlage an den im Getriebegehäuse 14 feststehenden Bremsring 50, so daß in der unbestromten Grundstellung der zweiten elektromagnetischen Kupplung 44, 46, 48, 54 das Hohlrad 30 des zweiten Planetengetriebes 18 undrehbar im Getriebegehäuse 14 gehalten ist. Durch Bestromen der Spule 46 wird die zweite elektromagnetische Kupplung 44, 46, 48, 54 in ihre bestromte Schaltstellung umgeschaltet, in der ihre Ankerplatte 54 durch Magnetkraft gegen die Federkraft der Ringtellerfeder 58 vom Bremsring 50 abgehoben wird und sich reibschlüssig an den Reibbremsbelag 48 der zweiten elektromagnetischen Kupplung 44, 46, 48, 54 anlegt. In dieser bestromten Schaltstellung der zweiten elektromagnetischen Kupplung 44, 46, 48, 54 sind die Hohlräder 28, 30 der beiden Planetengetriebe 16, 18 drehfest miteinander verbunden.

Die Planetenräder 26 des zweiten Planetengetriebes 18 sind um ihre eigenen Achsen drehbar an einem Planetenträger 60 gelagert, der seinerseits mittels eines Kugellagers 62 drehbar an der Bremszange 12 gelagert ist. Die Planetenräder 26 des zweiten Planetengetriebes 18 können also in für Planetengetriebe herkömmlicher Weise sowohl um das Sonnenrad 22 umlaufen als auch um ihr eigenen Achsen rotieren.

Das Sonnenrad 22 des zweiten Planetengetriebes 18 ist auf einem Wellenstummel 64 drehbar gelagert, der mit dem Planetenträger 60 einstückig ist.

Zum Umsetzen einer Rotationsbewegung des Planetenträgers 60 in eine translatorische Bewegung zum Andrücken zweier Reibbremsbeläge 66 an eine Bremsscheibe 68 weist die Radbremsvorrichtung 10 eine Bremsbetätigungseinrichtung 70 auf. Die Bremsbetätigungseinrichtung 70 ist als Rollengewindetrieb ausgebildet und in einer Bohrung 72 untergebracht, die senkrecht zur Bremsscheibe 68 und koaxial zu den Planetengetrieben 16, 18 im Bremssattel 12 angebracht ist. Der Rollengewindetrieb weist eine Spindel 74 auf, die sich über ein Rollen-Axiallager 76 in der Bohrung 72 des Bremssattels 12 abstützt. Über einen mit dem Planetenträger 60 des zweiten Planetengetriebes 18 einstückigen Vierkantzapfen 78, der in ein komplementäres Vierkantloch 80 der Spindel 74 eingreift, ist die Spindel 74 durch Formschluß drehfest mit dem Planetenträger 60 verbunden. Die Spindel 74 wird von einer zur Spindel 74 koaxialen Mutter 82 umgriffen, die einen größeren Gewindedurchmesser als die Spindel 74 aufweist, so daß ein ringförmiger Zwischenraum zwischen der Spindel 74 und der Mutter 82 besteht. In dem Zwischenraum ist eine Anzahl Gewinderollen 84 angeordnet, die sowohl mit dem Gewinde der Spindel 74 als auch mit dem Gewinde der Mutter 82 in Eingriff stehen. Die Spindel 74, die Mutter 82 und die Gewinderollen 84 sind Bestandteile des Rollengewindetriebs.

Durch rotierenden Antrieb der Spindel 74 werden die Gewinderollen 84 zu einer den Planetenrädern eines Planetengetriebes vergleichbaren Umlaufbewegung um die Spindel 74 angetrieben, wobei sich die Gewinderollen 84 zugleich um ihre eigenen Achsen drehen. Die Umlaufbewegung der Gewinderollen 84 und deren Rotation um ihre eigenen Achsen bewirken aufgrund der Steigungen der Gewinde der Spindel 74, der Mutter 82 und der Gewinderollen 84 eine axiale Verschiebung der Mutter 82. Die Verschiebung der Mutter 82 erfolgt auch dann, wenn die Gewinderollen 84, wie im dargestellten Ausführungsbeispiel, eine Gewindesteigung von Null aufweisen, also mit umlaufenden Nuten an Stelle eines Gewindes versehen sind. Durch ihre Verschiebung drückt die Mutter 82 den an ihr angebrachten Reibbremsbelag 66 gegen eine Seite der Bremsscheibe 68. Der andere Reibbremsbelag 66 wird über den als Schwimmsattel ausgebildeten Bremssattel 12 in einer an sich bekannter Weise durch Reaktionskraft gegen die andere Seite der Bremsscheibe 68 gedrückt.

Die Funktion der erfindungsgemäßen Radbremsvorrichtung 10 ist folgende: Zum Überwinden eines Luftspalts zwischen den Reibbremsbelägen 66 und der Bremsscheibe 68 wird die erste Kupplung 38, 40, 52 bestromt, wodurch ihre Ankerscheibe 52 vom im Getriebegehäuse 14 feststehenden Bremsring 50 abgehoben und in reibschlüssige Anlage an den Pohlkörper 38 der ersten elektromagnetischen Kupplung 38, 40, 52 gebracht wird. Das Sonnenrad 22 des zweiten Planetengetriebes 18 ist drehfest mit dem Sonnenrad 20 des ersten Planetengetriebes 16 und damit drehfest mit der Motorwelle 32 verbunden. Durch bestromen des Elektromotors 34 wird das Sonnenrad 22 des zweiten Planetengetriebes 18 unmittelbar vom Elektromotor 34 rotierend angetrieben und treibt über die Planetenräder 26 und den Planetenträger 60 des zweiten Planetengetriebes 18 die Spindel 74 des Rollengewindetriebs 74, 82, 84 rotierend an. Das Hohlrad 30 wird von der zweiten, stromlosen Kupplung 44, 46, 48, 54 unverdrehbar im Getriebegehäuse 14 gehalten. Die Mutter 82 verschiebt den an ihr angebrachten Reibbremsbelag 66 unmittelbar und den gegenüberliegenden Reibbremsbelag 66 mittelbar über den Bremssattel 12 in Anlage an die Bremsscheibe 68. Das Hohlrad 28 des ersten Planetengetriebes 16 ist bei der Überwindung des Luftspalts zwischen den Reibbremsbelägen 66 und der Bremsscheibe 68 frei drehbar, das erste Planetengetriebe 16 ist außer Funktion.

Sobald die Reibbremsbeläge 66 an der Bremsscheibe 68 anliegen, steigt die zur Erzeugung einer Bremskraft bzw. eines Bremsmoments notwendige Andruckkraft der Reibbremsbeläge 66 an die Bremsscheibe 68 und infolgedessen das dazu erforderliche Antriebsdrehmoment der Gewindespindel 74 sprungartig an. Dies ist beispielsweise durch einen sprungartigen Anstieg der Stromaufnahme des Elektromotors 34 oder durch dessen Drehzahlabfall problemlos feststellbar. Zum Aufbringen der zum Bremsen notwendigen Andruckkraft bei an der Bremsscheibe 68 anliegenden Reibbremsbelägen 66 wird außer der ersten Kupplung 38, 40, 52 auch die zweite Kupplung 44, 46, 48, 54 bestromt. Es sind also außer den Sonnenrädern 20, 22 auch die Hohlräder 28, 30 der beiden Planetengetriebe 16, 18 drehfest miteinander verbunden. Während das mit der Motorwelle 32 drehfest verbundene Sonnenrad 22 des zweiten Planetengetriebes 18 mit derselben Geschwindigkeit wie die Motorwelle 32 rotiert, wird das Hohlrad 30 des zweiten Planetengetriebes 18 über das Sonnenrad 20, die um die ortsfesten Achsstifte 42 drehbaren Planetenräder 24 und das Hohlrad 28 des ersten Planetengetriebes 16, mit dem das Hohlrad 30 des zweiten Planetengetriebes 18 über die zweite, bestromte Kupplung 40, 46, 48, 54 drehfest verbunden ist, zu einer Drehbewegung in entgegengesetzter Richtung wie das Sonnenrad 22 des zweiten Planetengetriebes 18 angetrieben. Das zweite Planetengetriebe 18 wirkt in diesem Zustand als Differentialgetriebe, es überlagern sich die Rotation des Sonnenrades 22 und des Hohlrades 30, die Umlaufgeschwindigkeit der Planetenräder 26 des zweiten Planetengetriebes 18 ist erheblich verringert, mithin das vom Elektromotor 34 auf die Spindel 74 des Rollengewindetriebs 74, 82, 84 übertragene Drehmoment um ein Vielfaches erhöht. Da die Sonnenräder 20, 22 der beiden Planetengetriebe 16, 18 denselben Durchmesser haben und die Planetenräder 24 des ersten Planetengetriebes 16 größer als die Planetenräder 26 des zweiten Planetengetriebes 18 sind, laufen die Planetenräder 26 des zweiten Planetengetriebes 18 weiterhin in derselben Richtung um wie beim Überwinden des Luftspalts zwischen den Reibbremsbelägen 66 und der Bremsscheibe 68.

Zum Verringern der Bremskraft, zum Lösen der Radbremsvorrichtung 10 und zum Einstellen des Luftspalts zwischen den Reibbremsbelägen 66 und der Bremsscheibe 68 wird die erste Kupplung 38, 40, 52 nicht bestromt und die zweite Kupplung 44, 46, 48, 54 wird bestromt, der Elektromotor 34 wird bestromt und zwar mit derselben Polung wie beim Zuspannen der Radbremsvorrichtung 10, d. h. der Elektromotor 34 hat beim Zuspannen und beim Lösen der Radbremsvorrichtung 10 die selbe Drehrichtung. Die unbestromte erste Kupplung 38, 40, 52 hält das Sonnenrad 22 des zweiten Planetengetriebes 18 undrehbar fest. Die Spindel 74 wird über das Sonnenrad 20, die Planetenräder 24 und das Hohlrad 28 des ersten Planetengetriebes 16, das mit dem Hohlrad 28 des ersten Planetengetriebes 16 mitdrehende Hohlrad 30 des zweiten Planetengetriebes 18 und die um das stillstehende Sonnenrad 22 des zweiten Planetengetriebes 18 umlaufenden Planetenräder 26 des zweiten Planetengetriebes 18 rotierend angetrieben. Die beiden Planetengetriebe 16, 18 bewirken eine Drehrichtungsumkehr, die Spindel 74 dreht bei gleicher Drehrichtung der Motorwelle 32 in entgegengesetzter Richtung wie zuvor, so daß die Reibbremsbeläge 66 von der Bremsscheibe 68 abgehoben werden.

Um eine aufgebrachte Bremskraft beizubehalten, werden die beiden Kupplungen 38, 40, 52; 44, 46, 48, 54 nicht bestromt, sie arretieren das Sonnenrad 22 und das Hohlrad 30 des zweiten Planetengetriebes 18, wodurch das zweite Planetengetriebe 18 blockiert ist, so daß sich die Spindel 74 des Rollengewindetriebs 74, 82, 84 auch bei stromlosen Elektromotor 34 nicht dreht. Eine aufgebrachte Bremskraft wird beibehalten. Die erfindungsgemäße Bremsvorrichtung 10 läßt sich dadurch als Feststellbremse verwenden. Auch läßt sich eine Bremskraft während einer Bremsung konstant halten, ohne daß der Elektromotor 34 bestromt werden muß, was den Vorteil einer Energieersparnis und einer geringeren Erwärmung des Elektromotors 34 mit sich bringt.

## Patentansprüche

1. Elektromechanische Radbremsvorrichtung für ein Kraftfahrzeug, mit einem Elektromotor (34) zum Antrieb eines ersten Planetengetriebes (16), mit einem zweiten Planetengetriebe (18), das vom ersten Planetengetriebe angetrieben wird, mit einer Bremsbetätigungseinrichtung (70), die vom zweiten Planetengetriebe (18) betätigt wird und mit der ein Reibbremsbelag (66) an einen Bremskörper (68) andrückbar und wieder abhebbar ist, wobei der Bremskörper (68) drehfest mit einem Fahrzeugrad ist, **dadurch gekennzeichnet, daß** die beiden Planetengetriebe (16, 18) verschiedene Übersetzungsverhältnisse aufweisen, daß die elektromechanische Radbremsvorrichtung (10) eine erste, schaltbare Kupplung (38, 40, 52) aufweist, die in einer Schaltstellung ein Sonnenrad (22) des zweiten Planetengetriebes (18) arretiert und in einer anderen Schaltstellung die Sonnenräder (20, 22) der beiden Planetengetriebe (16, 18) drehfest miteinander verbindet, und daß die elektromechanische Radbremsvorrichtung (10) eine zweite, schaltbare Kupplung (44, 46, 48, 54) aufweist, die in einer Schaltstellung ein Hohlrad (30) des zweiten Planetengetriebes (18) arretiert und die in einer anderen Schaltstellung die Hohlräder (28, 30) der beiden Planetengetriebe (16, 18) drehfest miteinander verbindet.

2. Elektromechanische Radbremsvorrichtung nach Anspruch 1, **dadurch gekennzeichnet, daß** das erste Planetengetriebe (16) ein größeres Untersetzungsverhältnis aufweist.

3. Elektromechanische Radbremsvorrichtung nach Anspruch 1, **dadurch gekennzeichnet, daß** ein Planetenträger (36) des ersten Planetengetriebes (16) feststehend ist.

4. Elektromechanische Radbremsvorrichtung nach Anspruch 1, **dadurch gekennzeichnet, daß** ein Planetenträger (60) des zweiten Planetengetriebes (18) die Bremsbetätigungseinrichtung (70) betätigt.

5. Elektromechanische Radbremsvorrichtung nach Anspruch 1, **dadurch gekennzeichnet, daß** zumindest eine der beiden Kupplungen (38, 40, 52; 44, 46, 48, 54) als elektromagnetische Kupplung ausgebildet ist.

6. Elektromechanische Radbremsvorrichtung nach Anspruch 5, **dadurch gekennzeichnet, daß** beide Kupplungen (38, 40, 52; 44, 46, 48, 54) als elektromagnetische Kupplungen ausgebildet sind, und daß die erste Kupplung (38, 40, 52) in einer unbestromten Grundstellung das Sonnenrad (22) und die zweite Kupplung (44, 46, 48, 54) in einer unbestromten Grundstellung das Hohlrad (30) des zweiten Planetengetriebes (18) arretiert.

7. Elektromechanische Radbremsvorrichtung nach Anspruch 1, **dadurch gekennzeichnet, daß** die Bremsbetätigungseinrichtung (70) ein Schraubgewinde, insbesondere einen Rollengewindetrieb (74, 82, 84), aufweist.

## Claims

1. Electromechanical wheel-brake device for a motor vehicle, with an electric motor (34) for driving a first planetary gear mechanism (16), with a second planetary gear mechanism (18), which is driven by the first planetary gear mechanism, with a brake-actuating device (70), which is actuated by the second planetary gear mechanism (18) and by means of which a friction brake lining (66) can be pressed against a braking body (68) and raised from the latter again, the braking body (68) being rotationally fixed to a vehicle wheel, **characterized in that** the two planetary gear mechanisms (16, 18) have different transmission ratios, **in that** the electromechanical wheel-brake device (10) has a first switchable clutch (38, 40, 52), which, in one position, locks a sun wheel (22) of the second planetary gear mechanism (18) and, in another position, connects the sun wheels (20, 22) of the two planetary gear mechanisms (16, 18) to one another in a rotationally fixed manner, and **in that** the electromechanical wheel-brake device (10) has a second switchable clutch (44, 46, 48, 54), which, in one position, locks an annulus (30) of the second planetary gear mechanism (18) and, in another position, connects the annuluses (28, 30) of the two planetary gear mechanisms (16, 18) to one another in a rotationally fixed manner.

2. Electromechanical wheel-brake device according to Claim 1, **characterized in that** the first planetary gear mechanism (16) has a larger reduction ratio.

3. Electromechanical wheel-brake device according to Claim 1, **characterized in that** a planet carrier (36) of the first planetary gear mechanism (16) is fixed.

4. Electromechanical wheel-brake device according to Claim 1, **characterized in that** a planet carrier (60) of the second planetary gear mechanism (18) actuates the brake-actuating device (70).

5. Electromechanical wheel-brake device according to Claim 1, **characterized in that** at least one of the two clutches (38, 40, 52; 44, 46, 48, 54) is designed as an electromagnetic clutch.

6. Electromechanical wheel-brake device according to Claim 5, **characterized in that** both clutches (38, 40, 52; 44, 46, 48, 54) are designed as electromagnetic clutches, and **in that**, in a base position, in which it is not supplied with current, the first clutch (38, 40, 52) locks the sun wheel (22), and, in a base position, in which it is not supplied with current, the second clutch (44, 46, 48, 54) locks the annulus (30) of the second planetary gear mechanism (18).

7. Electromechanical wheel-brake device according to Claim 1, **characterized in that** the brake-actuating device (70) has a screw thread, in particular a roller screw drive (74, 82, 84).

## Revendications

1. Dispositif de frein de roue électromécanique pour un véhicule automobile comportant un moteur électrique (34) pour entraîner une première transmission à train épicycloïdal (16) ainsi qu'une seconde transmission à train épicycloïdal (18) elle-même entraînée par la première transmission (16),
une installation d'actionnement de frein (70) actionnée par la seconde transmission à train épicycloïdal (18) et qui permet de presser une garniture de frein (66) contre un corps de frein (68) ou de soulever la garniture, le corps de frein (68) étant relié solidairement en rotation à une roue du véhicule,
**caractérisé en ce que**
les deux transmissions à train épicycloïdal (16, 18) ont des rapports de démultiplication différents,
le dispositif de frein de roue électromécanique (10) comporte un premier embrayage commutable (38, 40, 52) qui bloque la roue solaire (22) de la seconde transmission à train épicycloïdal (18) dans une position de commutation alors que dans l'autre position de commutation elle relie solidairement en rotation les roues solaires (20, 22) des deux transmissions à train épicycloïdal (16, 18), et
le dispositif de frein de roue électromécanique (10) comporte un second embrayage commuté (44, 46, 48, 54) qui dans une position de commutation bloque une couronne (30) de la seconde transmission à train épicycloïdal (18) et dans l'autre position de commutation relie solidairement en rotation les couronnes (28, 30) des deux transmissions à train épicycloïdal (16, 18).

2. Dispositif de frein de roue électromécanique selon la revendication 1,
**caractérisé en ce que**
la première transmission à train épicycloïdal (16) a le plus grand rapport de démultiplication.

3. Dispositif de frein de roue électromécanique selon la revendication 1,
**caractérisé en ce que**
le porte-satellite (36) de la première transmission à train épicycloïdal (16) est fixe.

4. Dispositif de frein de roue électromécanique selon la revendication 1,
**caractérisé en ce que**
le porte-satellite (60) de la seconde transmission à train épicycloïdal (18) actionne l'installation d'actionnement de frein (70).

5. Dispositif de frein de roue électromécanique selon la revendication 1,
**caractérisé en ce qu'**
au moins l'un des deux embrayages (38, 40, 52 ; 44, 46, 48, 54) est réalisé comme embrayage électromagnétique.

6. Dispositif de frein de roue électromécanique selon la revendication 5,
**caractérisé en ce que**
les deux embrayages (38, 40, 52 ; 44, 46, 48, 54) sont des embrayages électromagnétiques, et
le premier embrayage (38, 40, 52) bloque la roue solaire (22) dans sa position de base non alimentée et le second embrayage (44, 46, 48, 54) bloque la couronne (30) de la seconde transmission planétaire (18) lorsque ce second embrayage est dans sa position de base non alimentée.

7. Dispositif de frein de roue électromécanique selon la revendication 1,
**caractérisé en ce que**
l'installation d'actionnement de frein (70) comporte une vis notamment une transmission à galet de filetage (74, 82, 84).
